# EUROPEAN PATENT SPECIFICATION

(11) **EP 2 309 373 B1**
(45) Date of publication and mention of the grant of the patent: **24.06.2015**
(21) Application number: 10163209.9
(22) Date of filing: 19.05.2010
(51) Int. Cl.: G06F 3/06, G06F 17/30, H04N 5/765, H04N 5/76

(54) **Video recorder and recording setting method**
Videorekorder und Aufzeichnungseinstellverfahren
Enregistreur vidéo et procédé de configuration de l'enregistrement

(30) Priority: 16.09.2009 JP 2009213995
(43) Date of publication of application: 13.04.2011
(73) Proprietor: Kabushiki Kaisha Toshiba, Tokyo 105-8001 (JP)
(72) Inventor: Yamanashi, Naoki, Minato-ku Tokyo 105-8001 (JP)
(74) Representative: Henkel, Breuer & Partner

(56) References cited:
- JP-A- 2004 295 655
- JP-A- 2009 104 739
- gutemine: "USB Harddisk statt SATA leichtgemacht"[Online] 24 May 2008 (2008-05-24), XP002602725 Dream multimedia Retrieved from the Internet: URL:http://www.dream-multimedia-tv.de/boar d/thread.php?threadid=7077&hilight=USB2HDD +plugin> [retrieved on 2010-09-29]
- Anonymous: "Dreambox Dm 800 HD PVR"[Online] 2008, pages 1-110, XP002602881 Dream multimedia Retrieved from the Internet: URL:http://www.dream-multimedia-tv.de/down load/user_manual_dm800_hd.pdf> [retrieved on 2010-09-30]
- Anonymous: "User Manual TViX HD M-6500A"[Online] 26 May 2008 (2008-05-26), pages 1-68, XP002602901 Dvico Co. Retrieved from the Internet: URL:http://dvdnews.free.fr/TViX/Manuels/TV iX_M6500_English.pdf> [retrieved on 2010-09-30]

## Description

### BACKGROUND OF THE INVENTION

### Technical Field

The present invention relates to a video recorder, and more particularly, to a video recorder to which an external storage device can be connected.

### Background Art

In recent years, for example, digital televisions or Hard Disk Drive (HDD) recorders have come into widespread use in which an external storage device can be connected to a connection terminal such as an Universal Serial Bus (USB) port. The digital television or the HDD recorder has a of recording data on the external storage device connected to the USB port thereof or a function of playing image data (still picture data and moving picture data) recorded on the external storage device.

In this case, plural file systems are used for the external storage device (*see* e.g., JP-A-2004-295655). For example, there are a File Allocation Table (FAT) file system and an XFS file system. The FAT file system has advantages of a small management area, a high-speed access property, high compatibility with many apparatuses, and high generality. For example, the FAT file system is used for portable recording media, such as memory cards. Meanwhile, the XFS file system has high stability or reliability and a band guarantee function. Therefore, the XFS file system is suitable, for example, for storage devices for recording.

However, an apparatus having modules corresponding to the FAT and XFS file formats needs to have connection terminals corresponding to the FAT and XFS file formats. For example, a video recorder that updates firmware using firmware data which are recorded on an external storage device formatted as the FAT file system or reproduces image data, and records program data on an external storage device formatted as the XFS file system needs to have dedicated connection terminals corresponding to the modules and the file systems. In this case, for example, the size or the cost of the apparatus is likely to increase.

GUTEMINE "USB Harddisk statt SATA leichtgemacht", XP002602725 http://www.dream-multimrdia-ty.de/board/thread.php?threadid =7077&hilight=USB2HDD+plugin discloses a system for mounting an external HDD to a video recorder and to format the external HDD according to the ext3 system.

### SUMMARY OF THE INVENTION

One of objects of the invention is to provide a video recorder having a connection terminal to which an external storage device can be connected and a simple physical structure, and a setting method.

According to the present invention the above object is achieved by a combination of features of claims 1 or 8. The dependent claims are directed to different advantageous aspects of the invention.

An apparatus according to the invention may be implemented as a method according to the invention, and a method according to the invention may be implemented as an apparatus according to the invention.

The apparatus or the method according to the invention may also be implemented as a program for allowing a computer to perform a process corresponding to the method (or a program for allowing the computer to function as a unit corresponding to the apparatus or a program for allowing the computer to perform a function corresponding to the apparatus). In addition, the apparatus or the method according to the invention may also be implemented as a computer-readable recording medium having the program recorded thereon.

According to the present invention, it is possible to provide a video recorder having a connection terminal to which an external storage device can be connected and a simple physical structure, and a recording setting method using the video recorder.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
Fig. 1 is a diagram illustrating an outward appearance of a digital television broadcast signal receiver according to an embodiment of the invention and a network system including the digital television broadcast signal receiver as a main component;
Fig. 2 is a diagram illustrating a main signal processing system of the digital television broadcast signal receiver;
Fig. 3 is a flowchart illustrating a procedure of the digital television broadcast signal receiver;
Fig. 4 is a diagram illustrating an example of a display screen displayed by the digital television broadcast signal receiver;
Fig. 5 is a flowchart illustrating a procedure of a digital television broadcast signal receiver according to another embodiment; and
Fig. 6 is a flowchart illustrating a procedure of a digital television broadcast signal receiver according to an example not covered by the claims.

### DETAILED DESCRIPTION OF EXEMPLARY EMBODIMENTS

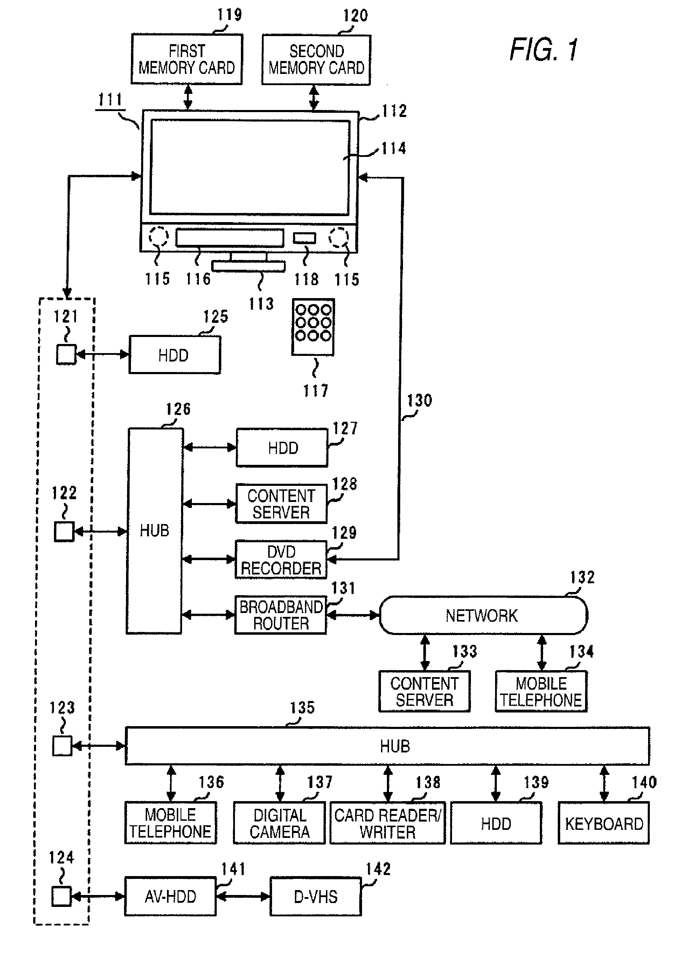

Hereinafter, exemplary embodiments of the invention will be described with reference to the accompanying drawings. Fig. 1 is a diagram schematically illustrating the outward appearance of a digital television broadcast signal receiver 111 according to an embodiment of the invention and an example of a network system including the digital television broadcast signal receiver 111 as a main component.

The digital television broadcast signal receiver 111 mainly includes a thin cabinet 112 and a supporting table 113 that vertically supports the cabinet 112. The cabinet 112 includes, for example, a flat panel image display (display) unit 114, such as a liquid crystal display panel, an SED (Surface-conduction Electron-emitter Display) panel or an Electro Luminescent (EL) display panel, a speaker 115, an operating unit 116, and a light receiving unit 118 that receives an operation signal transmitted from a remote controller 117.

For example, a first memory card 119, such as an SD (Secure Digital) memory card, an MMC (Multimedia Card), or a memory stick, can be inserted into or removed from the digital television broadcast signal receiver 111. The digital television broadcast signal receiver 111 records or reproduces information, such as programs or pictures, on or from the first memory card 119.

For example, a second memory card (IC card) 120 having, for example, contract information recorded thereon can be inserted into or removed from the digital television broadcast signal receiver 111. The digital television broadcast signal receiver 111 records or reproduces information on or from the second memory card 120.

In addition, the digital television broadcast signal receiver 111 includes a first LAN (Local Area Network) terminal 121, a second LAN terminal 122, a USB (Universal Serial Bus) terminal 123, and an i.LINK terminal 124.

Among them, the first LAN terminal 121 is used as a port only for a LAN-compatible HDD to record or reproduce information on or from the LAN-compatible HDD 125, which is a connected NAS (Network Attached Storage), through the Ethernet (registered trademark).

As such, since the first LAN terminal 121 is provided as a port only for the LAN-compatible HDD, it is possible to stably record information of a program with a high-definition image quality on the HDD 125, without being affected by other network environments or network conditions.

The second LAN terminal 122 is used as a general LAN-compatible port using the Ethernet (registered trademark). For example, the second LAN terminal 122 is connected to a LAN-compatible HDD 127, a content server 128, and a DVD (Digital Versatile Disk) recorder 129 having an HDD provided therein through a hub 126, and is used to transmit information to these devices.

The content server 128 functions as a content server in a home network and is configured as an UPnP (Universal Plug and Play)-compatible device that provides a service for supplying URI (Uniform Resource Identifier) information required to access content.

Digital information transmitted through the second LAN terminal 122 is used only for a control system. Therefore, in order to transmit analog video and audio information between the DVD recorder 129 and the digital television broadcast signal receiver 111, it is necessary to provide a dedicated analog transmission path 130.

The second LAN terminal 122 is connected to a network 132, such as the Internet, through a broadband router 131 that is connected to the hub 126, and is used to transmit information to a content server 133 or a mobile telephone 134 through the network 132.

The content server 133 functions as a server that provides content, and is configured as an UPnP-compatible device that provides a service for supplying UR1 information required to access content.

The USB terminal 123 is used as a general USB-compatible port. For example, the USB terminal 123 is connected to USB devices, such as a mobile telephone 136, a digital camera 137, a card reader/writer 138 corresponding to a memory card, an HDD 139, and a keyboard 140 through a hub 135 and is used to transmit information to these USB devices.

When the USB device connected to the USB terminal 123 (regardless of whether the USB device is connected to the USB terminal 123 through the hub 135) is a storage device, such as the HDD 139, the digital television broadcast signal receiver 111 can use the storage device with a different method according to a file format. Specifically, for example, when the HDD 139, which is an external storage device, is formatted as a FAT file system (mounted as the FAT file system), the digital television broadcast signal receiver 111 can use firmware data recorded on the HDD 139 to update firmware, or reproduce image data (including both still picture data and moving picture data) recorded on the HDD 139.

When the external storage device (HDD) 139, which is a USB device, is formatted with an XFS file system (mounted as the XFS file system), the digital television broadcast signal receiver 111 can use the HDD 139 for recording. Specifically, the digital television broadcast signal receiver 111 can record the received broadcast program data on the HDD 139, or read and reproduce image data (including, for example, recorded broadcast program data) on the HDD 139.

For example, the i.LINK terminal 124 is connected in series to, for example, an AV-HDD 141 and a D (Digital)-VHS (Video Home System) 142 and is used to transmit information to these devices.

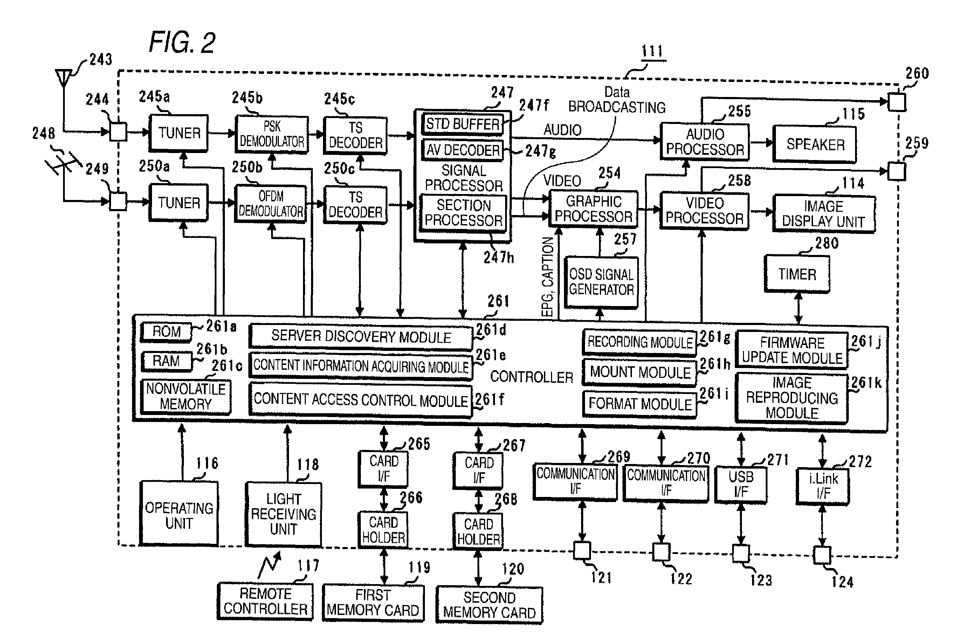

Fig. 2 is a diagram illustrating a main signal processing system of the digital television broadcast signal receiver 111.

A satellite digital television broadcast signal received by a BS/CS digital broadcast signal receiving antenna 243 is supplied to a tuner 245a for satellite digital broadcasting through an input terminal 244.

The tuner 245a selects a broadcast signal of a desired channel in response to a control signal transmitted from a controller 261, and outputs the selected broadcast signal to a PSK (Phase Shift Keying) demodulator 245b.

The PSK demodulator 245b demodulates the broadcast signal selected by the tuner 245a in response to the control signal transmitted from the controller 261 to obtain a transport stream including a desired program, and outputs the transport stream to a TS decoder 245c.

The TS decoder 245c performs TS decoding on a transport stream (TS)-multiplexed signal in response to the control signal transmitted from the controller 261 to depacketize digital video and audio signals of a desired program, thereby obtaining a PES (Packetized Elementary Stream). Then, the TS decoder 245c outputs the signals to an STD buffer 247f of a signal processor 247.

In addition, the TS decoder 245c outputs section information transmitted by digital broadcasting to a section processor 247h of the signal processor 247.

A terrestrial digital television broadcast signal received by a terrestrial broadcast signal receiving antenna 248 is supplied to a tuner 250a for terrestrial digital broadcasting through an input terminal 249.

The tuner 250a selects a broadcast signal of a desired channel in response to the control signal transmitted from the controller 261 and outputs the selected broadcast signal to an OFDM (Orthogonal Frequency Division Multiplexing) demodulator 250b.

The OFDM demodulator 250b demodulates the broadcast signal selected by the tuner 250a in response to the control signal transmitted from the controller 261 to obtain a transport stream including a desired program, and outputs the transport stream to a TS decoder 250c.

The TS decoder 250c performs TS decoding on a transport stream (TS)-multiplexed signal in response to the control signal transmitted from the controller 261 to depacketize digital video and audio signals of a desired program, thereby obtaining a PES (Packetized Elementary Stream). Then, the TS decoder 250c outputs the signals to the STD buffer 247f of the signal processor 247.

In addition, the TS decoder 250c outputs section information transmitted by digital broadcasting to the section processor 247h of the signal processor 247.

When receiving television broadcast signals, the signal processor 247 selectively performs predetermined digital signal processing on the digital video and audio signals respectively supplied from the TS decoder 245c and the TS decoder 250c, and outputs the processed signals to a graphic processor 254 and an audio processor 255. In addition, when playing back the content, the signal processor 247 selects a content reproduction signal input from the controller 261, performs predetermined digital signal processing, and outputs the processed signal to the graphic processor 254 and the audio processor 255.

For example, various kinds of data for acquiring programs, electronic program guide (EPG) information, program attribute information (for example, a program genre), and caption information (service information, SI, or PSI) are input from the signal processor 247 to the controller 261.

The controller 261 performs an image generating process for displaying an EPG or a caption from the input information, and outputs the generated image information to the graphic processor 254.

The section processor 247h outputs various kinds of data for acquiring programs, the electronic program guide (EPG) information, the program attribute information (for example, a program genre), and the caption information (service information, SI, or PSI) in the section information input from the TS decoders 245c and 250c to the controller 261.

The graphic processor 254 combines (1) the digital video signal supplied from the AV decoder 247g in the signal processor 247, (2) an OSD signal generated by an OSD (On Screen Display) signal generator 257, (3) image data transmitted by data broadcasting, and (4) the EPG and caption signal generated by the controller 261, and outputs the combined signal to the video processor 258.

When a caption is displayed by caption broadcasting, the graphic processor 254 overlaps caption information with the video signal on the basis of the caption information obtained under the control of the controller 261.

The digital video signal output from the graphic processor 254 is supplied to the video processor 258. The video processor 258 converts the input digital video signal into an analog video signal of a format that can be displayed by the image display unit 114, and outputs the converted analog video signal to the image display unit 114 such that the image display unit 114 displays the analog video signal. In addition, the video processor 258 outputs the analog video signal to the outside through an output terminal 259.

The audio processor 255 converts the input digital audio signal into an analog audio signal of a format that can be reproduced by the speaker 115 and outputs the analog audio signal to the speaker 115, and thus the speaker 115 plays back the analog audio signal. In addition, the audio processor 255 outputs the analog audio signal to the outside through an output terminal 260.

The controller 261 controls the overall operation of the digital television broadcast signal receiver 111 including various receiving operations. The controller 261 has, for example, a CPU (Central Processor) provided therein, receives the operation signal input from the operating unit 116 or the operation signal transmitted from the remote controller 117 through the light receiving unit 118, and controls each unit such that the content of the operation signal is reflected.

In this case, the controller 261 mainly uses a ROM (Read Only Memory) 261 a that stores the control program executed by the CPU, a RAM (Random Access Memory) 261b that provides a work area to the CPU, and a non-volatile memory 261c that stores, for example, various kinds of setup information and control information.

The controller 261 is connected to a card holder 266 into which the first memory card 119 can be inserted through a card I/F (Interface) 265. Therefore, the controller 261 can transmit information to the first memory card 119 inserted into the card holder 266 through the card I/F 265.

The controller 261 is connected to a card holder 268 into which the second memory card 120 can be inserted through a card I/F 267. Therefore, the controller 261 can transmit information to the second memory card 120 inserted into the card holder 268 through the card I/F 267.

The controller 261 is connected to the first LAN terminal 121 through a communication I/F 269. In this way, the controller 261 can transmit information to the LAN-compatible HDD 125 connected to the first LAN terminal 121 through the communication I/F 269. In this case, the controller 261 functions as a DHCP (Dynamic Host Configuration Protocol) server, allocates an IP (Internet Protocol) address to the LAN-compatible HDD 125 connected to the first LAN terminal 121, and controls the LAN-compatible HDD 125.

In addition, the controller 261 is connected to the second LAN terminal 122 through a communication I/F 270. In this way, the controller 261 can transmit information to each device (see Fig. 1) connected to the second LAN terminal 122 through the communication I/F 270.

The controller 261 is connected to the USB terminal 123 through a USB I/F 271. In this way, the controller 261 can transmit information to each device (see Fig. 1) connected to the USB terminal 123 through the USB I/F 271.

The controller 261 is connected to the i.LINK terminal 124 through an i.LINK I/F 272. In this way, the controller 261 can transmit information to each device (see Fig. 1) connected to the i.LINK terminal 124 through the i.LINK I/F 272.

The controller 261 has (I) a server discovery module 261d using UPnP, (2) a content information acquiring module 261e using UPnP, and (3) a content access control module 261f. In addition, the controller 261 has (4) a recording module 261g, (5) a mount module 261h, (6) a format module 261i, (7) a firmware update module 261j, and (8) an image reproducing module 261k.
(1) The controller 261 performs the server discovery module 261d to discover an UPnP-compatible device on the network using an UPnP discovery module. For example, the server discovery module 261d discovers the content server 128 using the UPnP discovery module.
(2) The controller 261 performs the content information acquiring module 261e to control the UPnP-compatible device using an UPnP control module and acquires URI information required to access content in the UPnP-compatible device. For example, the content information acquiring module 261e controls the content server 128 and acquires URI information required to access the content stored in, for example, the HDD of the content server 128 from the content server 128.
(3) The controller 261 performs the content access control module 261f to determine whether to access the content on the basis of the IP address information of the server acquired by the server detecting module 261 d, the IP address information obtained from the URI information acquired by the content information acquiring module 261e, the IP address allocated to the LAN terminal 122 of the digital television broadcast signal receiver 111, and a netmask. If it is determined that access to the content is available, the controller 261 allows access to content. On the other hand, if it is determined that access to the content is unavailable, the controller 261 displays information indicating that access to the content is unavailable on the image display unit 114 using OSD.
(4) The controller 261 performs the recording module 261g to record information on various kinds of storage devices, such as an HDD. Specifically, for example, the controller 261 has a function of recording broadcast program data including video data and audio data output from the signal processor 247 on, for example, the HDD 125 connected to the first LAN terminal 121 or the HDD 139 connected to the USB terminal 123. In this case, it is assumed that, when the file format of the HDD 139 connected to the USB terminal 123 is the XFS file system, the recording module 261g uses the HDD 139 as a storage device. This is because the XFS file system has high stability or high reliability, has a band guarantee function, and can prevent the occurrence of a recording error due to the transmission delay of data even when data are recorded on the HDD 139, which is an external storage device. In addition, in many cases, an apparatus, such as a Linux-compatible PC, corresponds to the XFS file system, but the number of apparatuses corresponding to the XFS file system is generally small. Therefore, when data are recorded on the HDD 139 of the XFS file system, other apparatuses are less likely to access the HDD 139 and read data from the HDD 139. As a result, it is possible to keep the recorded program data stable.
(5) The controller 261 performs the mount module 261h to mount the devices connected to the first LAN terminal 121, the second LAN terminal 122, the USB terminal 123, and the i.LINK terminal 124. The term 'mount' means recognizing an external device such that it can be used and controlled by the digital television broadcast signal receiver 111. For example, in the case of the HDD 139 connected to the USB terminal 123, the mount module 261h is performed to recognize whether the file system of the HDD 139 is the XSF file system or the FAT file system and the controller can access (read or write data from or to) the HDD.
(6) The controller 261 performs the format module 261 to format an external storage device, such as the HDD 125 connected to the first LAN terminal 121 or the HDD 139 connected to the USB terminal 123, as an arbitrary file system. The term 'format' means an initializing process for enabling the storage device to be recognized or used as the XFS file system or the FAT file system. The format process includes, for example, a process of recording the default value of an identifier or partition information of the file system, a directory or file name, or structural information.
(7) The controller 261 performs the firmware update module 261j to update firmware. Firmware data used by the firmware update module 261j to update firmware may overlap the transport stream that can be acquired by the TS decoder 245c or the TS decoder 250c. For example, the firmware data may be recorded on the HDD 139 that is connected to the USB terminal 123. The firmware update module 261j starts up firmware write software to write firmware to a firmware recording portion (not shown) and restarts the firmware write software to update the firmware.
(8) The controller 261 performs the image reproducing module 261k to read still picture data or moving picture data from, for example, the first memory card 119, the second memory card 120, or the HDD 139 connected to the USB terminal 123 and plays back images. In this case, reproducible image data includes, for example, still picture data of a JPEG or BMP format and moving picture data of an MPEG-2 format. However, data that are read and reproduced from the HDD 139 are not limited to the image data, but it may be audio data. In this embodiment, image data are read and reproduced.

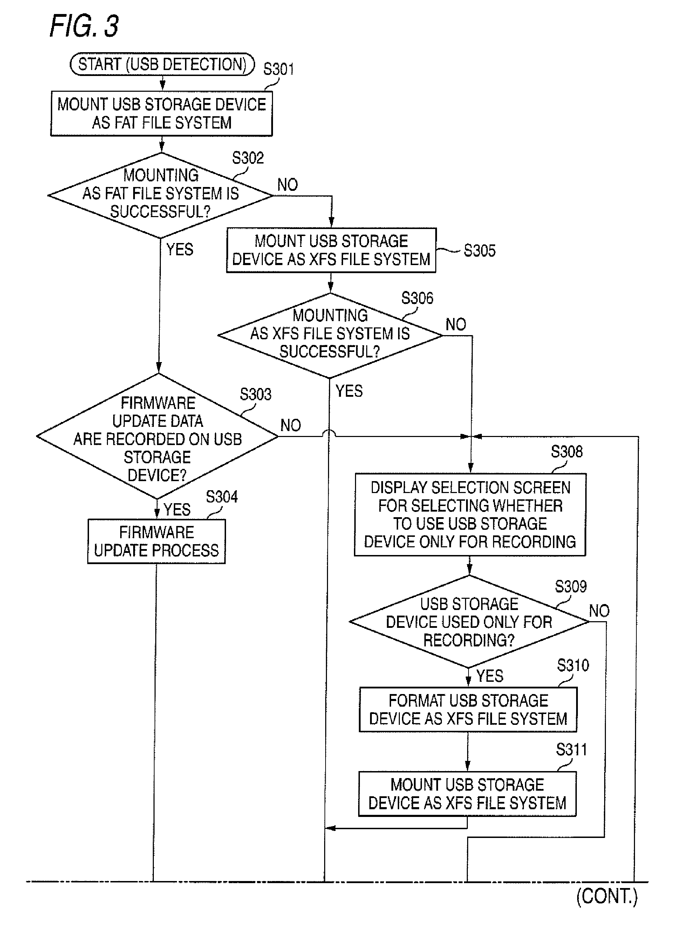

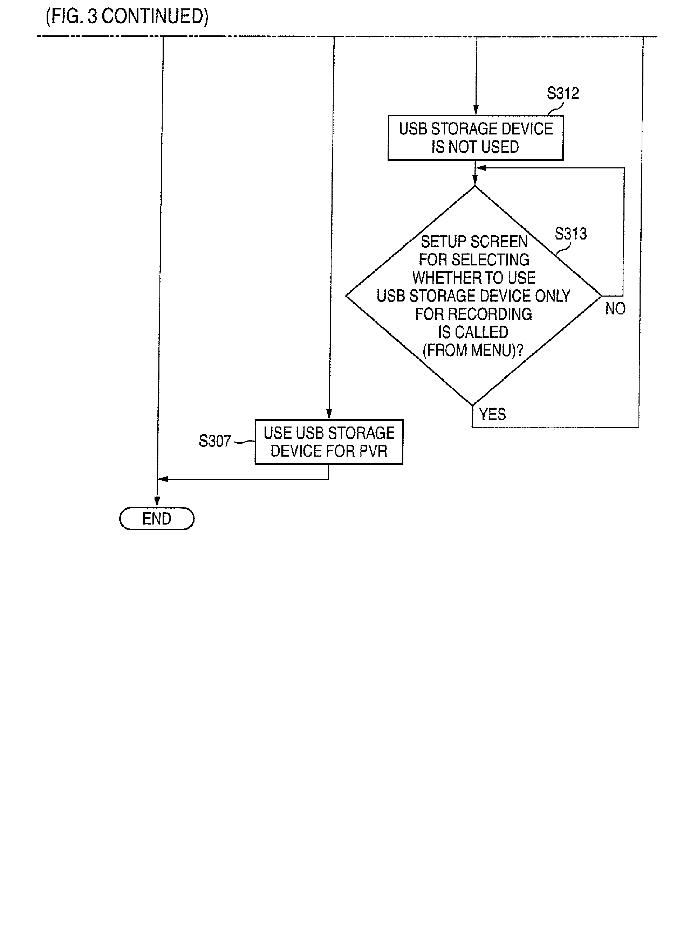

Next, the procedure of the digital television broadcast signal receiver 111 when an external storage device (storage device), such as the HDD 139, is connected to the USB terminal 123 will be described with reference to Fig. 3. Fig. 3 is a flowchart illustrating the procedure of the digital television broadcast signal receiver 111 when an external storage device is connected to the USB terminal 123 (when the external storage device is detected).

In Fig. 3, the HDD 139 connected to the USB terminal 123 is used for firmware update or a personal video recorder (PVR), but the reproduction of the image data recorded on the HDD 139 is not considered.

When the connection of the HDD 139 (USB storage device) to the USB terminal 123 is detected by the USB I/F 271, the controller 261 performs the mount module 261h to attempt to mount the HDD 139 (S301). When the HDD is mounted as the FAT file system (S302: Yes), the controller 261 performs the firmware update module 261j to determine whether data for firmware update is recorded on the HDD 139 (S303). If it is determined that the data for firmware update are recorded on the HDD 139 (S303: Yes), the controller 261 performs the firmware update module 261j to update firmware (S304).

In Step S302, when the HDD 139 is not mounted as the FAT file system (S302: No), the controller 261 performs the mount module 261h to attempt to mount the HDD 139 as the XFS file system (S305). When the HDD 139 is mounted as the XFS file system (S306: Yes), the controller sets the HDD 139 to be used as a PVR (Personal Video Recorder), that is, a recording storage device (S307). When the HDD 139 is used as a recording storage device, the controller performs the recording module 261g to record recording program data to the HDD 139, and can read and reproduce the recording program data recorded on the HDD 139.

When the HDD 139 is not mounted as the XFS file system in Step S306 (S306: No) or when the data for firmware update is not recorded on the HDD 139 in Step S303 (S303: No), under the control of the format module 261i, the OSD signal generator 257 outputs a selection screen for allowing the user to select whether to use the HDD 139 for a PVR (S308).

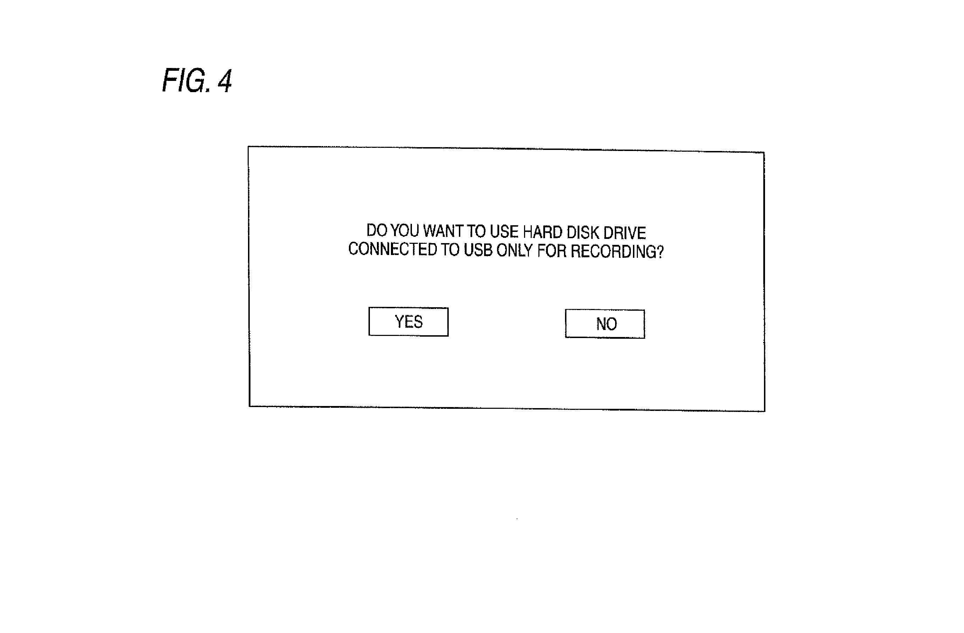

Fig. 4 shows an example of the selection screen for selecting whether to use the HDD 139 only for recording. In Fig. 4, a message 'Do you want to use the hard disk drive connected to the USB only for recording?' is displayed and the user can select 'Yes' or 'No'. In the screen shown in Fig. 4, when the user selects 'Yes', that is, when the user inputs an instruction to use the HDD 139 only for recording (S309: Yes), the controller 261 performs the format module 261i to format the HDD 139 as the XFS file system (S310). After the format process is completed, the controller performs the mount module 261h to mount the HDD 139 as the XFS file system (S311) and uses the HDD 139 for a PVR (S307).

In the screen (selection screen for selecting whether to use the HDD only for recording) shown in Fig. 4, when the user selects 'No', that is, when the user inputs an instruction not to use the HDD 139 only for recording (S309: No), the format module 261i is not performed. Since the HDD 139 is not mounted as either the FAT file system or the XFS file system, the HDD 139 is not used (S312).

Even after the HDD 139 is set to an unused state, the user can use a menu screen to display the selection screen shown in Fig. 4 for selecting whether to use the HDD 139 for recording. When the user calls a setup screen (a selection screen for selecting whether to use the HDD only for recording) from the menu screen after the HDD 139 is set to the unused state (S313: Yes), the process returns to Step S308, and the OSD signal generator 257 outputs the selection screen shown in Fig. 4 for selecting whether to use the HDD only for recording.

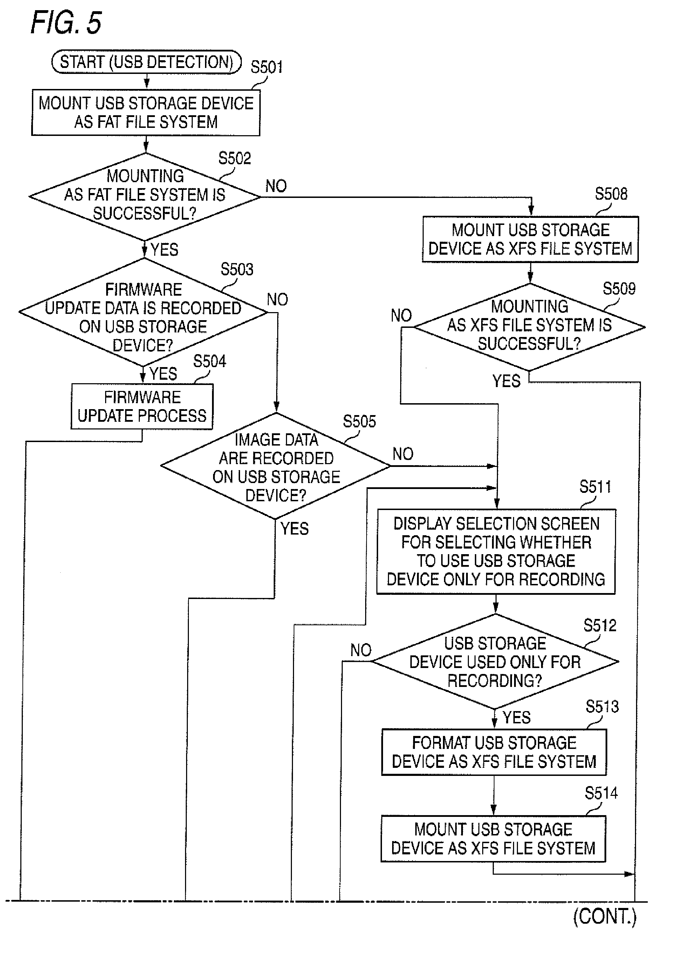

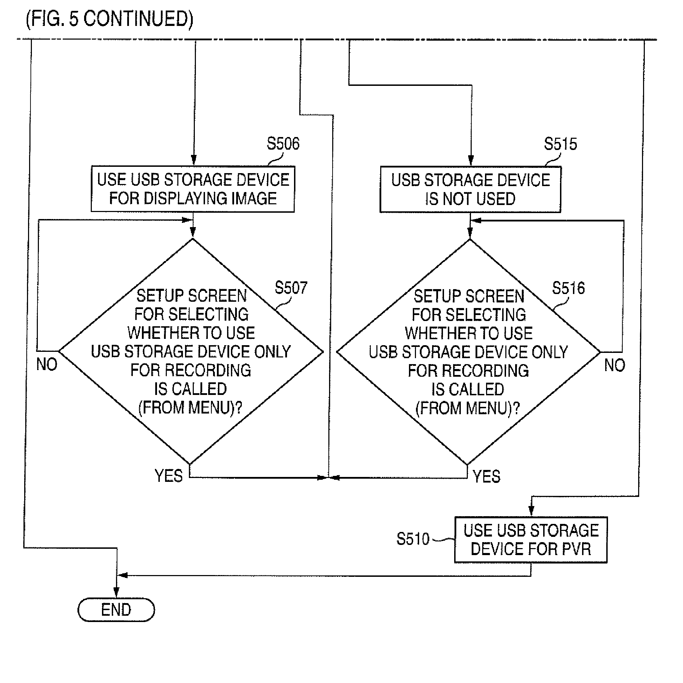

In Fig. 3, the reproduction of the image data recorded on the HDD 139 that is connected to the USB terminal 123 is not considered. Next, the procedure when the image data recorded on the HDD 139 are reproduced will be described with reference to Fig. 5. However, in the following description, a description of the same components as those shown in Fig. 3 will be omitted hereinafter.

When the connection of the HDD 139 (USB storage device) to the USB terminal 123 is detected by the USB I/F 271, the controller 261 performs the mount module 261h to attempt to mount the HDD 139 (S501). When the HDD is mounted as the FAT file system (S502: Yes), the controller 261 performs the firmware update module 261j to determine whether data for firmware update is recorded on the HDD 139 (S503). If it is determined that the data for firmware update are recorded on the HDD 139 (S503: Yes), the controller 261 performs the firmware update module 261j to update firmware (S504).

If it is determined in Step S503 that the data for firmware update are not recorded on the HDD 139 (S503: No), the controller determines whether image data are recorded on the HDD 139 (S505). In this case, it is possible to determine whether the image data are recorded by determining data with an extension, for example, 'jpg', 'bmp', or 'mpg', If it is determined that the image data are recorded on the HDD 139 (S505: Yes), the controller 261 performs the image reproducing module 261k to set the HDD 139 as a device for reproducing the image data (S506).

Even after the HDD 139 is set as a device for reproducing the image data, the user can use the menu screen to display the selection screen shown in Fig. 4 for selecting whether to use the HDD 139 for recording. When the user calls the setup screen (a selection screen for selecting whether to use the HDD only for recording) from the menu screen after the HDD 139 is set as a device for reproducing the image data (S507: Yes), the process proceeds to Step S511, and the OSD signal generator 257 outputs the selection screen shown in Fig. 4 for selecting whether to use the HDD only for recording.

In Step S502, when the HDD 139 is not mounted as the FAT file system (S502: No), the controller 261 performs the mount module 261h to attempt to mount the HDD 139 as the XFS file system (S508). When the HDD 139 is mounted as the XFS file system (S509: Yes), the controller sets the HDD 139 to be used as a PVR, that is, a recording storage device (S511).

When the HDD 139 is not mounted as the XFS file system in Step S509 (S509: No) or when image data is not recorded on the HDD 139 in Step S505 (S505: No), under the control of the format module 261i, the OSD signal generator 257 outputs the selection screen shown in Fig. 4 for allowing the user to select whether to use the HDD 139 for a PVR (S511).

In the screen shown in Fig. 4, when the user inputs an instruction to use the HDD 139 only for recording (S512: Yes), the controller 261 performs the format module 261i to format the HDD 139 as the XFS file system (S513). After the format process is completed, the controller performs the mount module 261h to mount the HDD 139 as the XFS file system (S514) and uses the HDD 139 for a PVR (S510).

In the screen shown in Fig. 4, when the user inputs an instruction not to use the HDD 139 only for recording (S512: No), the format module 261i is not performed. Therefore, the HDD 139 is not used (S515).

Even after the HDD 139 is set to an unused state, the user can use the menu screen to display the selection screen shown in Fig. 4 for selecting whether to use the HDD 139 for recording. When the user calls the setup screen (a selection screen for selecting whether to use the HDD only for recording) the menu screen after the HDD is set to the unused state (S516: Yes), the process returns to Step S511, and the OSD signal generator 257 outputs the selection screen shown in Fig. 4 for selecting whether to use the HDD 139 only for recording.

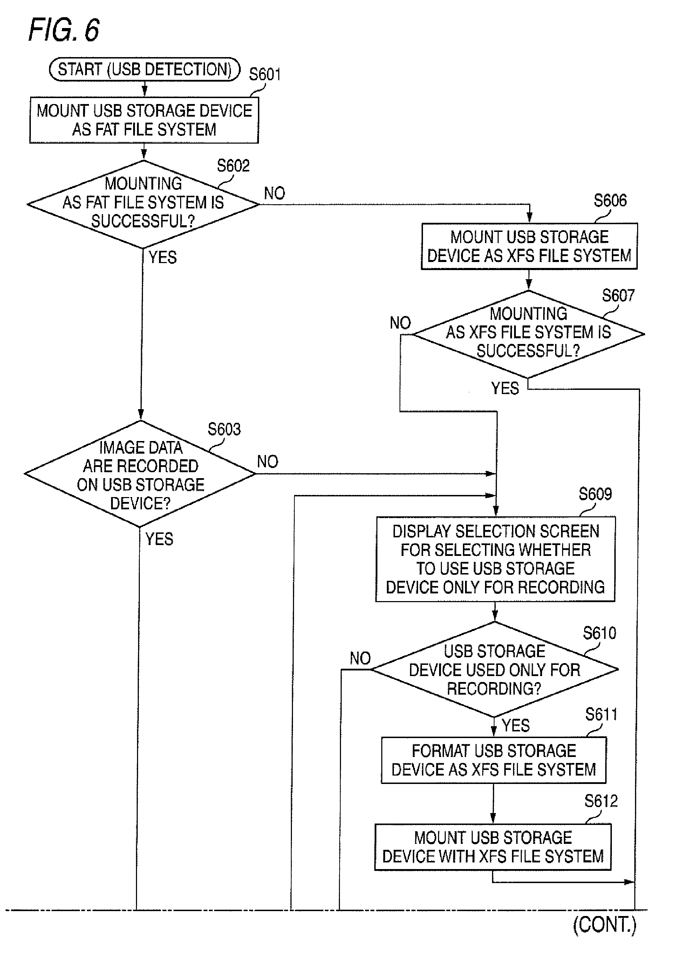

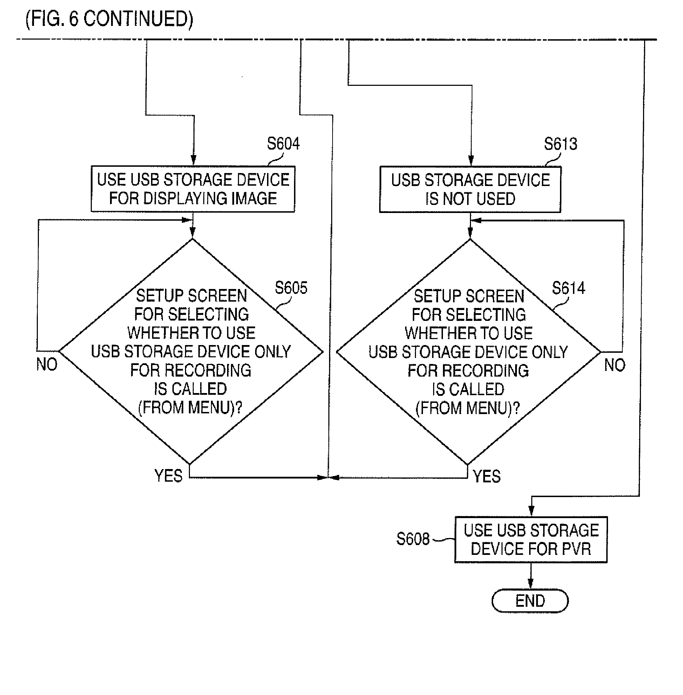

Next, the procedure when the update of data for firmware update recorded on the HDD 139 that is connected to the USB terminal 123 is not considered will be described with reference to Fig. 6. In the following description, a description of the same components as those shown in Figs. 3 and 5 will be omitted hereinafter. This example is not covered by the claims.

When the connection of the HDD 139 (USB storage device) to the USB terminal 123 is detected by the USB I/F 271, the controller 261 performs the mount module 261h to attempt to mount the HDD 139 (S601). When the HDD is mounted as the FAT file system (S602: Yes), the controller determines whether image data is recorded on the HDD 139 (S603). If it is determined that the image data are recorded on the HDD 139 (S603: Yes), the controller 261 performs the image reproducing module 261k to set the HDD 139 as a device for reproducing the image data (S604).

Even after the HDD 139 is set as a device for reproducing the image data, the user can use the menu screen to display the selection screen shown in Fig. 4 for selecting whether to use the HDD 139 for recording. When the user calls the setup screen (a selection screen for selecting whether to use the HDD only for recording) from the menu screen after the HDD 139 is set as a device for reproducing the image data (S605: Yes), the process proceeds to Step S609, and the OSD signal generator 257 outputs the selection screen shown in Fig. 4 for selecting whether to use the HDD only for recording.

In Step S602, when the HDD 139 is not mounted as the FAT file system (S602: No), the controller 261 performs the mount module 261h to attempt to mount the HDD 139 as the XFS file system (S606). When the HDD 139 is mounted as the XFS file system (S607: Yes), the controller sets the HDD 139 to be used as a PVR, that is, a recording storage device (S608).

When the HDD 139 is not mounted as the XFS file system in Step S607 (S607: No) or when image data are not recorded on the HDD 139 in Step S603 (S603: No), under the control of the format module 261i, the OSD signal generator 257 outputs the selection screen shown in Fig. 4 for allowing the user to select whether to use the HDD 139 for a PVR (S609).

In the screen shown in Fig. 4, when the user inputs an instruction to use the HDD 139 only for recording (S610: Yes), the controller 261 performs the format module 261i to format the HDD 139 as the XFS file system (S611). After the format process is completed, the controller performs the mount module 261h to mount the HDD 139 as the XFS file system (S612) and uses the HDD 139 for a PVR (S608).

In the screen shown in Fig. 4, when the user inputs an instruction not to use the HDD 139 only for recording (S610: No), the format module 261i is not performed (S613). Therefore, the HDD 139 is not used (S613).

Even after the HDD 139 is set to an unused state, the user can use the menu screen to display the selection screen shown in Fig. 4 for selecting whether to use the HDD 139 for recording. When the user calls the setup screen (a selection screen for selecting whether to use the HDD only for recording) from the menu screen after the HDD is set to the unused state (S614: Yes), the process returns to Step S609, and the OSD signal generator 257 outputs the selection screen shown in Fig. 4 for selecting whether to use the HDD 139 only for recording.

As described above, according to this example, the purpose of the HDD 139 is changed according to the file format of the HDD 139, which is an external storage device connected to the USB terminal 123. In this way, it is possible to use an external storage device connected to the USB terminal 123 for plural purposes suitable for each file format (in this example, for example, a recording storage device or a storage device for reproducing images).

Since an external storage device connected to one USB terminal 123 can be used for a plurality of purposes, it is possible to simplify a physical structure, as compared to the structure in which dedicated USB terminals corresponding to each module are provided. In this way, it is possible to prevent an increase in the cost and the size of an apparatus and the user does not need to consider the connection of storage devices to the terminals according to the modules.

## Claims

1. A video recorder connectable to an external storage device (139) formatted as a first file system FAT or a second file system, the video recorder being configured to use the storage device with a different method according to a file system, comprising:
a connection terminal (121, 122, 123, 124);
a detecting module (261) configured to detect whether the external storage device (139) is connected to the connection terminal (121, 122, 123, 124);
a mount module (261h) configured to mount the external storage device (139);
a format module (261i) configured to format the external storage device (139); and
a setting module (261g) configured to set the external storage device (139) as a recording storage device;
**characterized in that**
the mount module (261h) is configured to mount the external storage device (139) as the first file system FAT or as the second file system if the detecting module (261) detects that the external storage device (139) is connected to the connection terminal (121, 122, 123, 124), wherein the second file system is different from the first file system FAT;
the format module (261i) is configured to format the external storage device (139) as the second file system when the mount module (261h) has mounted the external storage device (139) as the first file system FAT; and
the setting module (261g) is configured to set the external storage device (139) as a recording storage device when the mount module (261h) has mounted the external storage device (139) as the second file system;
the video recorder being configured so that when the detecting module (261) detects that the external storage device (139) is connected to the connection terminal (121, 122, 123, 124), the mount module (261h) firstly attempts to mount the external storage device (139) as the first file system FAT and then if the external storage is not mounted as the first file system FAT, the mount module (261h) attempts to mount the external storage device (139) as the second file system; and
the video recorder further comprising a firmware update module (261j) configured to update firmware using firmware update data recorded on the external storage device (139) when the external storage device is mounted as the first file system FAT.

2. The video recorder according to claim 1, **characterized in that**, when the external storage device (139) is not mounted as the second file system, the format module (261i) formats the external storage device (139) as the second file system.

3. The video recorder according to claim 1, **characterized in that** after a selection screen for selecting whether to use the external storage device (139) as a recording storage device is output, the format module (261i) formats the external storage device (139) as the second file system.

4. The video recorder according to any one of claims 1 to 3, further comprising:
a tuner (245a, 250a); and
a recording module (247) configured to record a video signal received by the tuner on the external storage device (139).

5. The video recorder according to any one of claims 1 further comprising:
an image reproducing module (261k) configured to reproduce an image data when the mount module (261h) has mounted the external storage device as the first file system FAT (S602, Yes) and the image data is recorded on the external storage device (S603, Yes).

6. A method for operating a video recorder according to any one of claims 1 to 5, comprising the steps:
- detecting a connection of an external storage device (139) with a connection terminal;
- attempting (S301) to mount the external storage device (139) as a FAT file system;
- determining (S302) whether the external storage device (139) has been mounted as the FAT file system;
- if the determining step was not successful, attempting (S305) to mount the external storage device (139) as a second file system, which is different from the FAT file system and is used only for recording:
- determining (S303) whether firmware update data are recorded on the external storage device (139) when it is determined that the external storage device is mounted as the FAT file system:
- performing (S304) the firmware update if it is determined that firmware update data are recorded on the external storage device (139), else
- displaying (S308) a selection screen for selecting whether to use the external storage device (139) only for recording and formatting (S310) the external storage device (139) as the second file system, if the external storage device (139) is selected for recording only.

## Patentansprüche

1. Videorekorder, der mit einer externen Speichervorrichtung (139), formatiert als ein erstes Dateisystem FAT oder ein zweites Dateisystem, verbindbar ist, wobei der Videorekorder konfiguriert ist, um die Speichervorrichtung mit einem unterschiedlichen Verfahren gemäß einem Dateisystem zu verwenden, aufweisend:
einen Verbindungsanschluss (121, 122, 123, 124),
ein Erfassungsmodul (261), das konfiguriert ist, um zu erfassen, ob die externe Speichervorrichtung (139) mit dem Verbindungsanschluss (121, 122, 123, 124) verbunden ist,
ein Montierungsmodul (261h), das konfiguriert ist, um die externe Speichervorrichtung (139) zu montieren,
ein Formatierungsmodul (261i), das konfiguriert ist, um die externe Speichervorrichtung (139) zu formatieren, und
ein Einstellungsmodul (261g), das konfiguriert ist, um die externe Speichervorrichtung (139) als eine Aufzeichnungsspeichervorrichtung einzustellen,
**dadurch gekennzeichnet, dass**
das Montierungsmodul (261h) konfiguriert ist, um die externe Speichervorrichtung (139) als das erste Dateisystem FAT oder als das zweite Dateisystem zu montieren, falls das Erfassungsmodul (261) erfasst, dass die externe Speichervorrichtung (139) mit dem Verbindungsanschluss (121, 122, 123, 124) verbunden ist, wobei das zweite Dateisystem von dem ersten Dateisystem FAT verschieden ist,
das Formatierungsmodul (261i) konfiguriert ist, um die externe Speichervorrichtung (139) als das zweite Dateisystem zu formatieren, wenn das Montierungsmodul (261h) die externe Speichervorrichtung (139) als das erste Dateisystem FAT montiert hat, und
das Einstellungsmodul (261g) konfiguriert ist, um die externe Speichervorrichtung (139) als eine Aufzeichnungsspeichervorrichtung einzustellen, wenn das Montierungsmodul (261h) die externe Speichervorrichtung (139) als das zweite Dateisystem montiert hat,
der Videorekorder so konfiguriert ist, dass, wenn das Erfassungsmodul (261) erfasst, dass die externe Speichervorrichtung (139) mit dem Verbindungsanschluss (121, 122, 123, 124) verbunden ist, das Montierungsmodul (261h) zunächst versucht, die externe Speichervorrichtung (139) als das erste Dateisystem FAT zu montieren, und dann, falls der externe Speicher nicht als das erste Dateisystem FAT montiert ist, das Montierungsmodul (261h) versucht, die externe Speichervorrichtung (139) als das zweite Dateisystem zu montieren, und
der Videorekorder ferner ein Firmware-Updatemodul (261j) aufweist, das konfiguriert ist, um Firmware unter Verwendung von Firmware-Updatedaten, die auf der externen Speichervorrichtung (139) aufgezeichnet sind, zu aktualisieren, wenn die externe Speichervorrichtung als das erste Dateisystem FAT montiert ist.

2. Videorekorder nach Anspruch 1, **dadurch gekennzeichnet, dass**, wenn die externe Speichervorrichtung (139) nicht als das zweite Dateisystem montiert ist, das Formatierungsmodul (261i) die externe Speichervorrichtung (139) als das zweite Dateisystem formatiert.

3. Videorekorder nach Anspruch 1, **dadurch gekennzeichnet, dass**, nachdem ein Auswahlbildschirm zum Auswählen, ob die externe Speichervorrichtung (139) als eine Aufzeichnungsspeichervorrichtung verwendet wird, ausgegeben worden ist, das Formatierungsmodul (261i) die externe Speichervorrichtung (139) als das zweite Dateisystem formatiert.

4. Videorekorder nach einem der Ansprüche 1 bis 3, ferner aufweisend:
einen Tuner (245a, 250a), und
ein Aufzeichnungsmodul (247), das konfiguriert ist, um ein Videosignal, das durch den Tuner empfangen ist, auf der externen Speichervorrichtung (139) aufzuzeichnen.

5. Videorekorder nach Anspruch 1, ferner aufweisend:
ein Bildwiederherstellungsmodul (261k), das konfiguriert ist, um Bilddaten wiederherzustellen, wenn das Montierungsmodul (261h) die externe Speichervorrichtung als das erste Dateisystem FAT montiert hat (S602, JA) und die Bilddaten auf der externen Speichervorrichtung aufgezeichnet sind (S603, JA).

6. Verfahren zum Betreiben eines Videorekorders nach einem der Ansprüche 1 bis 5, aufweisend:
Erfassen einer Verbindung einer externen Speichervorrichtung (139) mit einem Verbindungsanschluss,
Versuchen (S301), die externe Speichervorrichtung (139) als ein FAT-Dateisystem zu montieren,
Bestimmen (S302), ob die externe Speichervorrichtung (139) als das FAT-Dateisystem montiert worden ist,
falls der Bestimmungsschritt nicht erfolgreich gewesen ist, Versuchen (S305), die externe Speichervorrichtung (139) als ein zweites Dateisystem zu montieren, welches von dem FAT-Dateisystem verschieden ist und nur zum Aufzeichnen verwendet wird,
Bestimmen (S303), ob Firmware-Updatedaten auf der externen Speichervorrichtung (139) aufgezeichnet sind, wenn bestimmt wird, dass die externe Speichervorrichtung als das FAT-Dateisystem montiert ist,
Durchführen (S304) des Firmware-Updates, falls bestimmt wird, dass Firmware-Updatedaten auf der externen Speichervorrichtung (139) aufgezeichnet sind, andernfalls
Anzeigen (S308) eines Auswahlbildschirms zum Auswählen, ob die externe Speichervorrichtung (139) nur zum Aufzeichnen verwendet wird, und Formatieren (S310) der externen Speichervorrichtung (139) als das zweite Dateisystem, falls die externe Speichervorrichtung (139) nur zum Aufzeichnen ausgewählt ist.

## Revendications

1. Enregistreur vidéo pouvant être connecté à un dispositif de stockage externe (139) formaté selon un premier système de fichiers FAT ou un second système de fichiers, l'enregistreur vidéo étant configuré pour utiliser le dispositif de stockage avec un procédé différent selon un système de fichiers, comprenant
une borne de connexion (121, 122, 123, 124) ;
un module de détection (261) configuré pour détecter si le dispositif de stockage externe (139) est connecté à la borne de connexion (121, 122, 123, 124) ;
un module de montage (261h) configuré pour monter le dispositif de stockage externe (139) ;
un module de formatage (261i) configuré pour formater le dispositif de stockage externe (139) ; et
un module de paramétrage (261g) configuré pour paramétrer le dispositif de stockage externe (139) en tant que dispositif de stockage d'enregistrement ;
**caractérisé en ce que**
le module de montage (261h) est configuré pour monter le dispositif de stockage externe (139) selon le premier système de fichiers FAT ou selon le second système de fichiers si le module de détection (261) détecte que le dispositif de stockage externe (139) est connecté à la borne de connexion (121, 122, 123, 124), dans lequel le second système de fichiers est différent du premier système de fichiers FAT ;
le module de formatage (261i) est configuré pour formater le dispositif de stockage externe (139) selon le second système de fichiers lorsque le module de montage (261h) a monté le dispositif de stockage externe (139) selon le premier système de fichiers FAT ; et
le module de paramétrage (261g) est configuré pour paramétrer le dispositif de stockage externe (139) en tant que dispositif de stockage d'enregistrement lorsque le module de montage (261h) a monté le dispositif de stockage externe (139) selon le second système de fichiers ;
l'enregistreur vidéo étant configuré de sorte que lorsque le module de détection (261) détecte que le dispositif de stockage externe (139) est connecté à la borne de connexion (121, 122, 123, 124), le module de montage (261h) essaie d'abord de monter le dispositif de stockage externe (139) selon le premier système de fichiers FAT puis, si le dispositif de stockage externe n'est pas monté selon le premier système de fichiers FAT, le module de montage (261h) tente de monter le dispositif de stockage externe (139) selon le second système de fichiers ; et
l'enregistreur vidéo comprenant en outre un module de mise à jour de micrologiciel (261j) configuré pour mettre à jour le micrologiciel en utilisant des données de mise à jour de micrologiciel enregistrées sur le dispositif de stockage externe (139) lorsque le dispositif de stockage externe est monté selon le premier système de fichiers FAT.

2. Enregistreur vidéo selon la revendication 1, **caractérisé en ce que**, lorsque le dispositif de stockage externe (139) n'est pas monté selon le second système de fichiers, le module de formatage (261i) formate le dispositif de stockage externe (139) selon le second système de fichiers.

3. Enregistreur vidéo selon la revendication 1, **caractérisé en ce que**, après qu'un écran de sélection pour sélectionner s'il faut utiliser le dispositif de stockage externe (139) en tant que dispositif de stockage d'enregistrement est fourni en sortie, le module de formatage (261i) formate le dispositif de stockage externe (139) selon le second système de fichiers.

4. Enregistreur vidéo selon l'une quelconque des revendications 1 à 3, comprenant en outre :
un syntonisateur (245a, 250a) ; et
un module d'enregistrement (247) configuré pour enregistrer un signal vidéo reçu par le syntonisateur sur le dispositif de stockage externe (139).

5. Enregistreur vidéo selon la revendication 1, comprenant en outre :
un module de reproduction d'image (261k) configuré pour reproduire des données d'image lorsque le module de montage (261h) a monté le dispositif de stockage externe selon le premier système de fichiers FAT (S602, Oui) et les données d'images sont enregistrées sur le dispositif de stockage externe (S603, Oui).

6. Procédé de fonctionnement d'un enregistreur vidéo selon l'une quelconque des revendications 1 à 5, comprenant les étapes consistant à :
détecter la connexion d'un dispositif de stockage externe (139) avec une borne de connexion ;
essayer (S301) de monter le dispositif de stockage externe (139) selon un système de fichiers FAT ;
déterminer (S302) si le dispositif de stockage externe (139) a été monté selon le système de fichiers FAT ;
si l'étape de détermination a échoué, essayer (S305) de monter le dispositif de stockage externe (139) selon un second système de fichiers, qui est différent du système de fichiers FAT et qui est utilisé uniquement pour l'enregistrement ;
déterminer (S303) si des données de mise à jour de micrologiciel sont enregistrées sur le dispositif de stockage externe (139) lorsqu'on a déterminé que le dispositif de stockage externe est monté selon le système de fichiers FAT ;
effectuer (S304) la mise à jour du micrologiciel si l'on a déterminé que des données de mise à jour de micrologiciel sont enregistrées sur le dispositif de stockage externe (139), sinon
afficher (S308) un écran de sélection pour sélectionner s'il faut utiliser le dispositif de stockage externe (139) uniquement pour l'enregistrement et formater (S310) le dispositif de stockage externe (139) selon le second système de fichiers, si le dispositif de stockage externe (139) est sélectionné uniquement pour l'enregistrement.
